# EUROPEAN PATENT APPLICATION

(11) **EP 2 650 123 A1**
(43) Date of publication of application: **16.10.2013**
(21) Application number: 12163581.7
(22) Date of filing: 10.04.2012
(51) Int. Cl.: B32B 27/12, B32B 7/14, B32B 3/26

(54) **Breathable artificial leather**

(71) Applicant: PinTail International B.V., 7609 RG Almelo (NL)
(72) Inventor: Goede, Lucas, 7468 EA Enter (NL)
(74) Representative: Nederlandsch Octrooibureau

(57) **Abstract**

The present invention relates to a multilayer, water impervious, fire retardant, breathable artificial leather and to a process for manufacturing a multilayer, water impervious, fire retardant, breathable artificial leather.

The multilayer, breathable, artificial leather comprises:
(a) an outer breathable, water pervious layer consisting of a fabric layer and a resin layer, the obverse surface of the fabric layer being coated with a resin layer;
(b) a discontinuous adhesive layer; and
(c) an inner water impervious, breathable membrane;

wherein the discontinuous adhesive layer is between the reverse surface of the fabric layer and obverse surface of the water impervious, breathable membrane.

## Description

### Field of the invention

The present invention relates to a multilayer, water impervious, fire retardant, breathable artificial leather and to a process for manufacturing a multilayer, water impervious, fire retardant, breathable artificial leather.

### Background of the invention

Artificial leathers are well known in the art and is used as a substitute for leather in upholstery, garments, clothing and fabrics. Generally, artificial leathers are coated fabrics. The manufacture of coated fabrics is well known: one or more coatings, in particular a polyurethane coating, are applied to a fabric substrate using either a direct coating process or a transfer process.

WO 00/030847, incorporated by reference, discloses a leather laminate comprising a liquid water resistant and water vapour permeable functional layer and a leather layer, wherein the leather layer can be artificial leather. The leather layer and the functional layer are bonded by using a continuous adhesive layer.

WO 00/70975, incorporated by reference, discloses a breathable, water impervious laminate comprising a porous PTFE membrane coated with a breathable polyurethane layer

WO 2009/002384, incorporated by reference, discloses a fire resistant laminate comprising a meltable textile outer layer and an intermediate protective layer comprising a waterproof film and a fabric layer.

US 2005/0014433, incorporated by reference, discloses a waterproof breathable composite fabric comprising a fabric layer and a nonporous water impermeable. Moisture vapour permeable layer.

However, there is a need in the art for an artificial leather which is breathable and water repellent, and which also has fire retardant properties and preferably also antimicrobial properties.

### Summary of the invention

The present invention relates to a multilayer, breathable, artificial leather comprising:
(a) an outer breathable, water pervious layer consisting of a fabric layer and a resin layer, the obverse surface of the fabric layer being coated with a resin layer;
(b) a discontinuous adhesive layer; and
(c) an inner water impervious, breathable membrane;
   wherein the discontinuous adhesive layer is between the reverse surface of the fabric layer and obverse surface of the water impervious, breathable membrane.

The present invention further relates to a process for manufacturing a multilayer, breathable, artificial leather, wherein subsequently:
(1) the obverse surface of a fabric layer is coated with a resin layer;
(2) the fabric layer is embossed and perforated; and
(3) the reverse surface of the fabric layer is laminated onto the obverse surface of a water impervious, breathable membrane, wherein the fabric layer and the water impervious, breathable membrane are bonded together by a discontinuous adhesive coating.

### Description of the Figures

Figure 1 shows a multilayer, breathable, artificial leather according to the present invention.
Figure 2 shows a multilayer, breathable, artificial leather according to a preferred embodiment of the present invention.

### Detailed description of the invention

The verb "to comprise" as is used in this description and in the claims and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there is one and only one of the elements. The indefinite article "a" or "an" thus usually means "at least one".

According to the present invention, it is preferred that the resin which is coated on the fabric layer is a polyurethane resin or a polyvinylchloride resin. Preferably, the fabric layer is coated with two or three layers of the resin.

To provide a leathery look to the multilayer, breathable, artificial leather the breathable, water pervious layer is preferably embossed. To provide breathability to the multilayer, breathable, artificial leather, the breathable, water pervious layer is perforated.

It is preferred that the breathable, water pervious layer comprises a fire retardant to provide fire resistance to the multilayer, breathable, artificial leather.

It is also preferred that the breathable, water pervious layer comprises a component providing resistance to micro-organisms.

According to the present invention, the fabric layer is a woven fabric, a knitted fabric or a non-woven fabric. The fabric may comprise fibres of natural or synthetic origin or both. Natural fibres include wool and cotton. Synthetic fibres include polyester, polypropylene and viscose.

The water impervious, breathable membrane is preferably a hydrophilic membrane, preferably selected from the group consisting of a polyester membrane, a polyester-polyether membrane and a polyurethane membrane. Such membranes are well known in the art. On the other hand, PTFE membranes or PTFE microporous films which are marketed by W. L. Gore and Associates, Inc. under the tradename Goretex® are hydrophobic. Such hydrophobic membranes are for example disclosed in WO 00/03047, WO 00/70975, US 4.194.041 and US 5.026.591, all incorporated by reference. Microporous membranes can therefore be hydrophobic or hydrophilic.

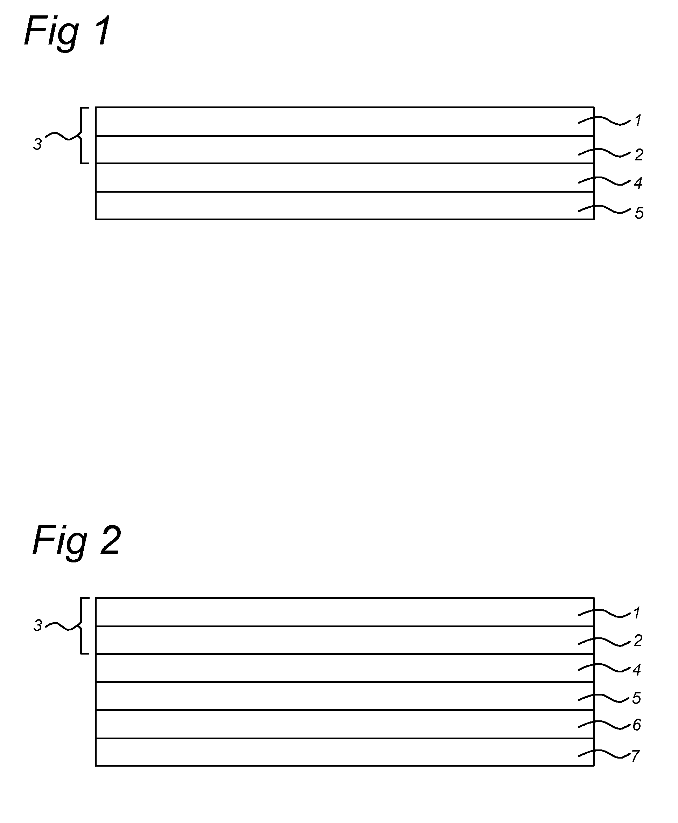

Figure 1 shows schematically a multilayer, breathable, artificial leather according to the present invention which consists of a resin layer 1 which together with the fabric layer 2 forms the breathable, water pervious layer 3, the discontinuous adhesive layer 4 and the water pervious, breathable membrane 5.

According to a preferred embodiment of the present invention, the multilayer, breathable, artificial leather comprises:
(a) an outer breathable, water pervious layer consisting of a first fabric layer and a resin layer, the obverse surface of the fabric layer being coated with a resin layer;
(b) a first discontinuous adhesive layer;
(c) an water impervious, breathable membrane;
(d) a second discontinuous adhesive layer; and
(e) a second fabric layer;
   wherein the first discontinuous adhesive layer is between the reverse surface of the fabric layer and obverse surface of the water impervious, breathable membrane, and wherein the second discontinuous adhesive layer is between the reverse surface of the water impervious, breathable membrane and the obverse surface of the second fabric layer.

In this preferred embodiment, the first fabric layer and/or the second fabric layer preferably comprises a fire retardant.

Figure 2 shows schematically a multilayer, breathable, artificial leather according to this preferred embodiment of the present invention which consists of a resin layer 1 which together with the fabric layer 2 forms the breathable, water pervious layer 3, the first discontinuous adhesive layer 4 and the water pervious, breathable membrane 5, the second discontinuous adhesive layer 6 and the second fabric layer 6.

The present invention also relates to a process for manufacturing a multilayer, breathable, artificial leather, wherein subsequently:
(1) the obverse surface of a fabric layer is coated with a resin layer;
(2) the fabric layer is embossed and perforated; and
(3) the reverse surface of the fabric layer is laminated onto the obverse surface of a water impervious, breathable membrane, wherein the fabric layer and the water impervious, breathable membrane are bonded together by a discontinuous adhesive coating.

According to a preferred embodiment of the process according to the present invention, a second fabric layer is laminated onto the reverse surface of the water impervious, breathable layer, wherein the second fabric layer and the water impervious, breathable layer are bonded together by a discontinuous adhesive coating. The adhesive coating is preferably a polyurethane adhesive coating which is well know in the art.

According to the present invention, it is preferred that the discontinuous adhesive coating is a dot coating or a grid coating so that the adhesive layer has a high breathability. Dot coating is a technique known in the art. US 4.871.600, incorporated by reference, discloses for example the lamination of nonwoven layer and film strips of thermoplastic polymers wherein the nonwoven layer and the film strips are bonded by spaced points of thermoplastic polymer.

According to the present invention, it is preferred that the adhesive coating comprises a polyurethane resin or a polyvinylchloride resin.

## Claims

1. Multilayer, breathable, artificial leather comprising:
(a) an outer breathable, water pervious layer consisting of a fabric layer and a resin layer, the obverse surface of the fabric layer being coated with a resin layer;
(b) a discontinuous adhesive layer; and
(c) an inner water impervious, breathable membrane;
wherein the discontinuous adhesive layer is between the reverse surface of the fabric layer and obverse surface of the water impervious, breathable membrane.

2. Multilayer, breathable, artificial leather according to Claim 1, wherein the resin is a polyurethane resin or a polyvinylchloride resin.

3. Multilayer, breathable, artificial leather according to Claim 1 or Claim 2, wherein the breathable, water pervious layer is embossed.

4. Multilayer, breathable, artificial leather according to any one of Claims 1 - 3, wherein the breathable, water pervious layer is perforated.

5. Multilayer, breathable, artificial leather according to any one of Claims 1 - 4, wherein the breathable, water pervious layer comprises a fire retardant.

6. Multilayer, breathable, artificial leather according to any one of Claims 1 - 5, wherein the fabric layer is a woven fabric, a knitted fabric or a non-woven fabric.

7. Multilayer, breathable, artificial leather according to any one of Claims 1 - 6, wherein the water impervious, breathable membrane is a hydrophilic membrane.

8. Multilayer, breathable, artificial leather according to any one of Claims 1 - 7, wherein the water impervious, breathable membrane is a polyester membrane, a polyester-polyether membrane or a polyurethane membrane.

9. Multilayer, breathable, artificial leather comprising:
(a) an outer breathable, water pervious layer consisting of a first fabric layer and a resin layer, the obverse surface of the fabric layer being coated with a resin layer;
(b) a first discontinuous adhesive layer;
(c) an water impervious, breathable membrane;
(d) a second discontinuous adhesive layer; and
(e) a second fabric layer;
wherein the first discontinuous adhesive layer is between the reverse surface of the fabric layer and obverse surface of the water impervious, breathable membrane, and wherein the second discontinuous adhesive layer is between the reverse surface of the water impervious, breathable membrane and the obverse surface of the second fabric layer.

10. Multilayer, breathable, artificial leather according to Claim 9, wherein the first fabric layer and/or the second fabric layer comprises a fire retardant.

11. Process for manufacturing a multilayer, breathable, artificial leather, wherein subsequently:
(1) the obverse surface of a fabric layer is coated with a resin layer;
(2) the fabric layer is embossed and perforated; and
(3) the reverse surface of the fabric layer is laminated onto the obverse surface of a water impervious, breathable membrane, wherein the fabric layer and the water impervious, breathable layer are bonded together by a discontinuous adhesive coating.

12. Process according to Claim 11, wherein a second fabric layer is laminated onto the reverse surface of the water impervious, breathable membrane, wherein the second fabric layer and the water impervious, breathable membrane are bonded together by a discontinuous adhesive coating.

13. Process according to Claim 11 or Claim 12, wherein the discontinuous adhesive coating is a dot coating or a grid coating.

14. Process according to any one of Claims 11 - 13, wherein the adhesive coating comprises a polyurethane resin or a polyvinylchloride resin.
